# EUROPEAN PATENT APPLICATION

(11) **EP 1 676 759 A1**
(43) Date of publication of application: **05.07.2006**
(21) Application number: 05075004.1
(22) Date of filing: 04.01.2005
(51) Int. Cl.: B60R 22/02, B60R 22/10

(54) **Safety harness for passengers in sleeping coaches or similar vehicles**

(71) Applicant: Frantzen, Kirsten Krabek, 8240 Risskov (DK)
(72) Inventor: Frantzen, Kirsten Krabek, 8240 Risskov (DK); Nielsen, Jørgen Mick Vincent Østergaard, 8240 Risskov (DK)
(74) Representative: Olesen, Kaj

(57) **Abstract**

The invention relates to a safety system for passengers of a sleeping coach with seats that may be transformed to horizontal bed places. The system comprises at least one seat belt to each seat of the sleeping coach, and a harness for each passenger to wear wherein the harness includes connection means to said at least one seat belt and means for restricting movement of the passenger in a substantially horizontal direction when using a bed place.

The invention also relates to a sleeping coach or similar vehicles.

## Description

### Background of the invention

The invention relates to a safety system for passengers in sleeping coaches or similar vehicles and a sleeping coach.

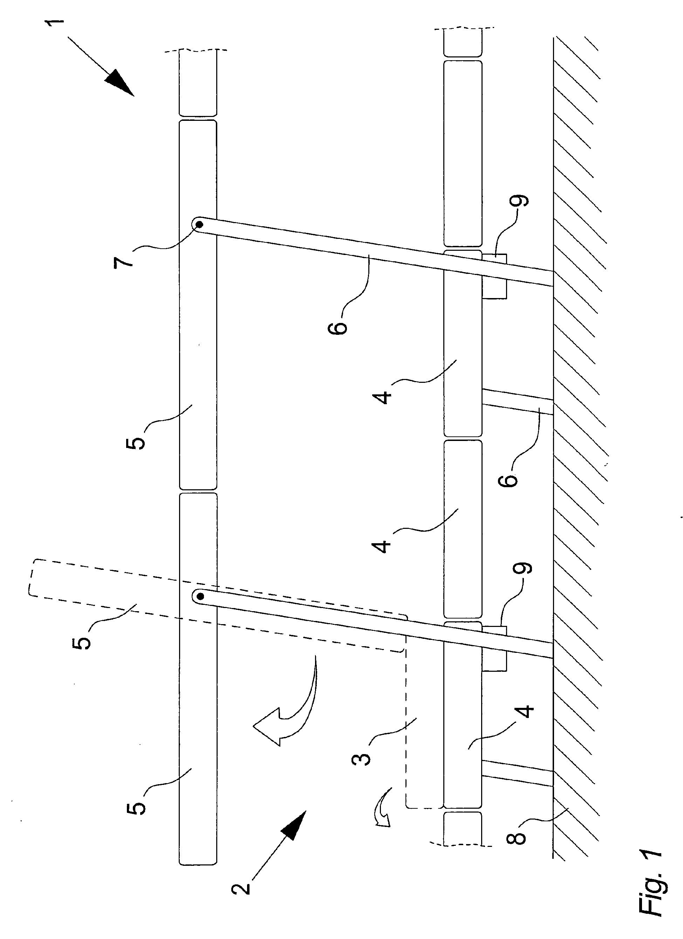

In the recent years it has become very popular among the public to use sleeping coaches in long journeys to the holiday resorts such as the ski resorts. The sleeping coaches allow the passengers to sit in comfortable seats during the daytime and after a conversion of the seats to sleep in bed places at night while the sleeping coach continues the journey. The seats are converted to bed places by tilting the seatbacks up to a horizontal position, as illustrated in fig. 1, and hereby establishing an upper level of bed places. Further, a top part of the bottom of each seat is flipped out and hereby making a lower level of bed plates. The two horizontal levels of bed places allow every passenger to have a place to sleep wherein a bed place may comprise two seatbacks or two bottoms of seats.

However, the sleeping coaches have the significant problem that passengers may feel uncomfortable or even be injured by falling out of their bed places if the sleeping coach has to brake hard e.g. an emergency braking.

Different measures have previously been suggested within the technical field in order to protect the passengers and especially from falling out of their bed places.

International patent application no. WO-A 02/047939 states a safety system that comprises upright partitioning boards which are positioned at the foot of each bed place. The boards create a guard rail that will restrict the passenger from sliding into the other passengers and from falling down.

The safety system comprises a number of disadvantages such as being quite expensive as well as bulky in use and in storing throughout the journey whereby fewer passengers may be transported with the sleeping coach.

The boards also restrict the bed places and thus make the sleeping coach less comfortable to use. Further, a sudden emergency braking may result in injuries to passengers which get in contact with the boards as well as injuries to those who miss the boards and fall out of their bed places.

An object of the invention is to establish a safety system for sleeping coaches without the abovementioned disadvantages and problems. It is especially an object of the invention to establish a safety system that is comfortable enough for the passengers to sleep when the system ensures that they cannot fall out of their bed places.

### The invention

The invention relates to a safety system for passengers of a sleeping coach or similar vehicles that include horizontal bed places to be used during transport, said system comprising safety means of the sleeping coach such as at least one seatbelt, and a harness for each passenger to wear when using a bed place wherein the harness includes connection means to said safety means and means for restricting movement of the passenger in a substantially horizontal direction.

Hereby are the abovementioned disadvantages of the prior art avoided. Further, is a safety system achieved which is relaxing for the passengers to wear, and especially to sleep in, as the system ensures that they cannot fall out of their bed places.

The harness and the seatbelt in combination ensure that the passenger may not move significantly such as in a horizontal direction as the seatbelt will lock when the sleeping coach brakes hard.

It should be emphasised that "the similar vehicles" may include vehicles that passengers sleep in e.g. trains or sleeping couches with fixed bed places.

In an aspect of the invention, said harness includes at least two shoulder and/or crutch straps. Hereby is a safer system achieved as the harness straps ensure that the passenger may not unconsciously slip out of the harness e.g. during sleep.

In an aspect of the invention, said straps are divided in relation to the vertical centre line of the passenger e.g. on each shoulder and along the thighs. Hereby, it is ensured that the passenger regardless of sex may feel comfortable using the invention e.g. during a hard braking of the sleeping coach.

In an aspect of the invention, said straps are connected to a harness belt. Hereby, is achieved a better hold on the harness straps and thus ensuring that the straps will not be displaced during use.

In an aspect of the invention, said connection means of the harness includes a channel for the seatbelt to go through. Hereby it is possible to connect the seatbelt to the harness in a secure way. The seatbelt may still slide in the channel and thus allow the passenger to turn and move in the bed place. Consequently, the passenger will achieve a higher degree of comfortableness during sleeping or resting in the bed place of the sleeping coach.

In an aspect of the invention, said connection means is part of said harness at the front or back e.g. part of a harness belt. Hereby, it is possible to use the harness with the seatbelt being directed above or below the passenger e.g. ensuring that seatbelt affects the passenger as little as possible.

In an aspect of the invention, said harness total or partly is a suit e.g. formed as a connected shirt and shorts with a harness belt as well as double layer connection means. Hereby, it is possible to create a suit that may replace a normal nightwear for the passengers in the sleeping coach and consequently draw away the attention of the passengers from the fact that they are wearing a safety system. Further, the double layer of the suit allows the system to be used in connection with a three-point seatbelt.

In an aspect of the invention, said straps comprise protection cushions such as shoulder and/or crutch cushions. Hereby, it is ensured that the horizontal movement of a passenger during an emergency braking will not cause severe damage to the impact positions of the harness e.g. at the shoulders or thighs. The cushions may preferably be made in a rubber, gel or similar shock absorbing material and be positioned between the straps and the passenger.

In an aspect of the invention, said seatbelt is extended by a seatbelt extender. Hereby it is ensured that the upper level bed places may be reached by the seatbelts and without having to replace the standard seatbelts with longer ones.

The invention also relates to a sleeping coach or similar vehicles for transporting passengers in seats that may be used as substantially vertical bed places wherein each passenger is connected with safety means such as a seatbelt of the sleeping coach and a safety system according to any of claims 1 to 9 to the sleeping coach when using one of said bed places.

Hereby is achieved an advantageous sleeping coach allowing the passengers with the safety system to sleep or rest safely during a journey.

### Figures

The invention will be described in the following with reference to the figures in which
- fig. 1: illustrates a section of the inside of a sleeping coach as seen from the side,
- fig 2: illustrates a passenger wearing a harness of a safety system according to the invention,
- fig 3: illustrates a passenger wearing another embodiment of a harness as illustrated in fig. 2,
- fig.4: illustrates a passenger wearing a harness comprising further attachment means,
- fig. 5: illustrates a passenger wearing a suit including a harness of the safety system according to the invention,
- fig. 6: illustrates a passenger wearing another embodiment of the suit of the safety system as illustrated in fig. 5, and
- fig. 7: illustrates a passenger wearing a further embodiment of the suit especially prepared to with a three-point seatbelt.

### Detailed description

Fig. 1 illustrates, as seen from the side, a section of seats of a sleeping coach 1 for the passengers to sit in and in a converted position also to sleep in. Each row of seats 2 normally comprises two and two seats separated by a gangway.

The seats are put into sleeping position by flipping over the top part 3 of the bottom of the seat, making it level with the bottom part 4 of the bottom of the seat. Two top parts 3 and two lower parts 4 of the bottoms of the seats together constitutes a bed place for one adult person.

The seatbacks 5 for the seats are tilted into a horizontal position around a pivoting point 7 of the seat frame 6. Two of the seatbacks 5 together constitute a bed place for an adult person.

The bottom parts 3, 4 of the seats form a lower level of bed places and the seatbacks an upper level of bed places in relation to the floor 8 of the sleeping coach.

The figure further illustrates how a seat belt 9 is attached to the floor at each seat 2.

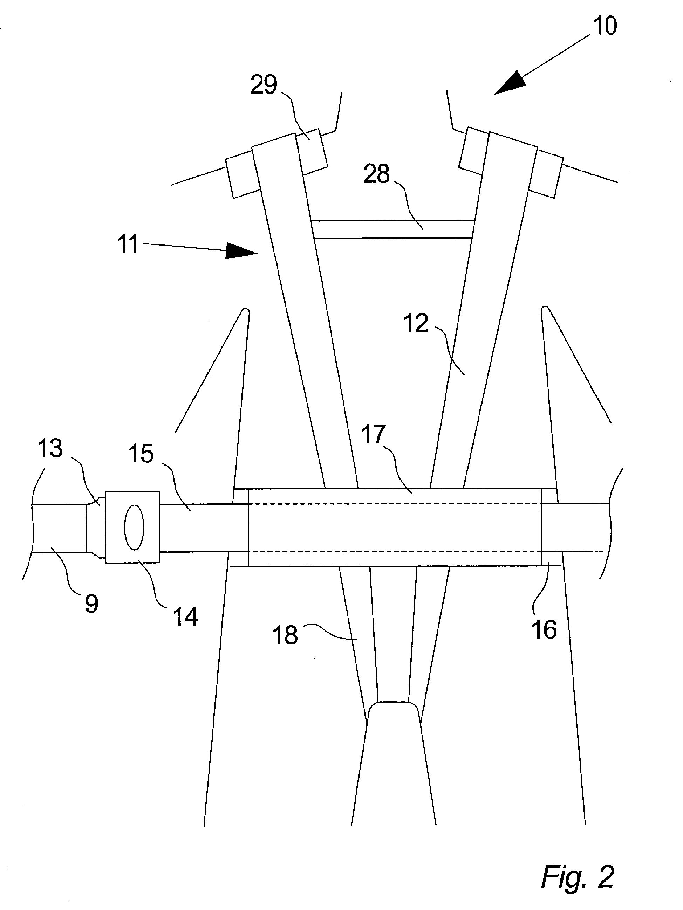

Fig. 2 illustrates a passenger 10 wearing a harness 11 of a safety system according to the invention.

The harness comprises a shoulder strap 12 over each shoulder of the passenger, a harness belt 16 at the waist and two crutch straps 18. The straps are connected to the harness belt whereby the belt assists in the positioning of the straps on the passenger. The structure of the harness is substantially the same seen from the front and the back of the passenger in the preferred embodiments.

However, the harness belt 16 is on the front or the back provided with a channel 17 for passing a seatbelt through. The belt including the channel is preferably made in the same material as the seatbelt or a material with at least the same strength as the seatbelt.

The standard seatbelt 9 of each seat in the sleeping coach may be connected to a seatbelt extender 15 to extend the seatbelts to the upper level of bed places. The extender includes a seatbelt buckle 14 to connect with the tongue 13 of the seatbelt 9. The extender also comprises a seatbelt tongue (not illustrated) in order to connect to the other end of the standard seatbelt system.

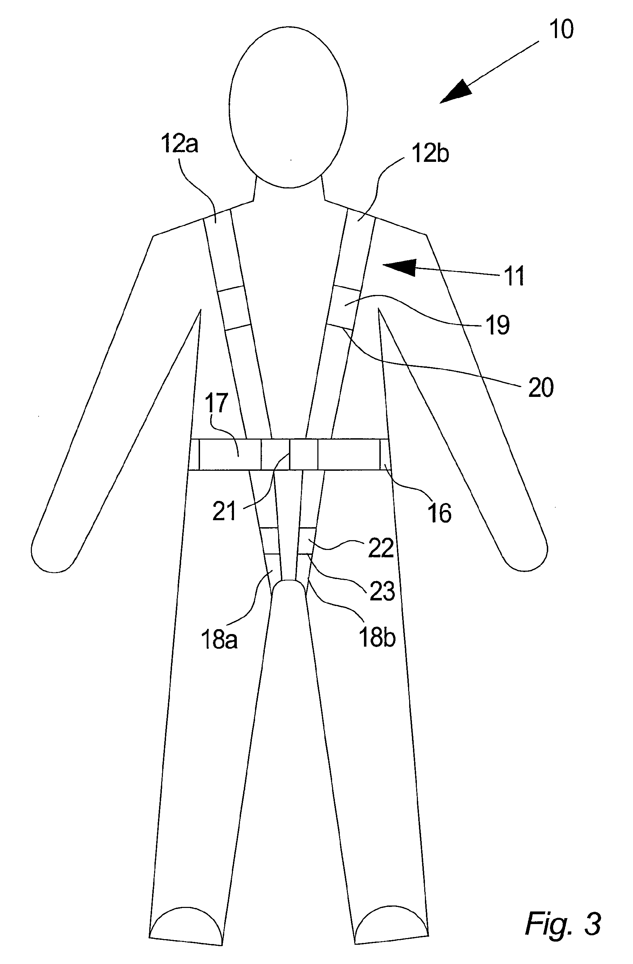

Fig. 3 illustrates a passenger 10 wearing another embodiment of a harness 11 as illustrated in fig. 2. Each of the shoulder straps 12a, 12b on the front of the harness 11 are provided with length adjustment means 19 as well as release means 20 for opening and closing the straps.

The crutch straps 18 are also provided with length adjustment means 22 and release means 23 for opening and closing the harness 11 in the crutch.

The harness belt 16 is on the front provided with width adjustment means 21 as well as the channel 17 for passing the seatbelt through and release means for opening and closing the belt.

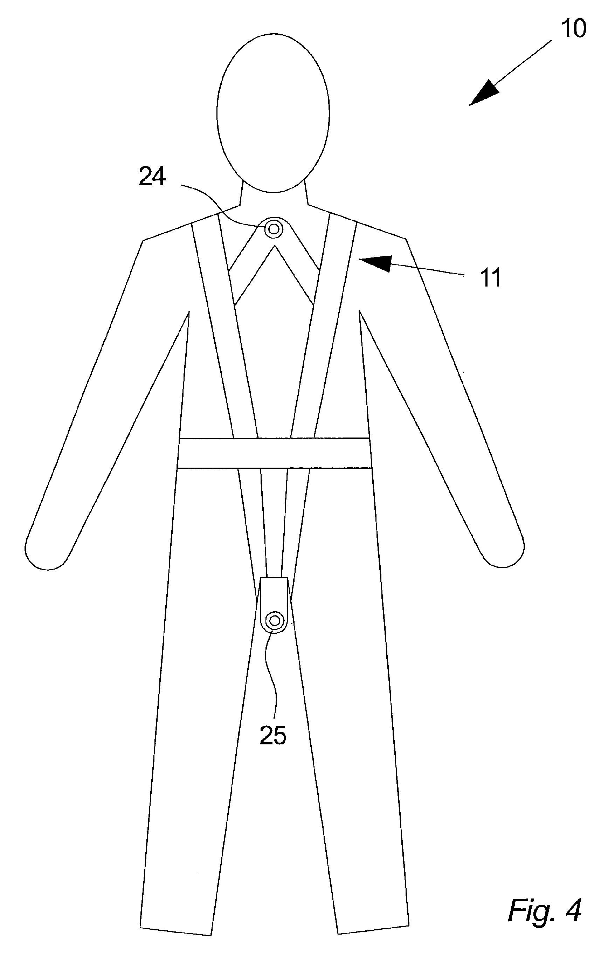

Fig. 4 illustrates a passenger 10 seen from the back wearing a harness 11 of the same type as illustrated in figs. 2 and 3. Close to the neck of the passenger the harness 11 is provided with neck attachment means 24 for connecting the harness 11 to the frame of the sleeping coach e.g. by a wire with some sort of hook or other locking mechanism (not shown) wherein the wire may be connected to the floor of the sleeping coach. Hereby is the passenger wearing the harness provided with additional connection beside the seatbelt.

Further, the additional connection may replace the seatbelt and hereby be the only connection to the sleeping coach.

Likewise the harness 11 is provided with crutch attachment means 25.

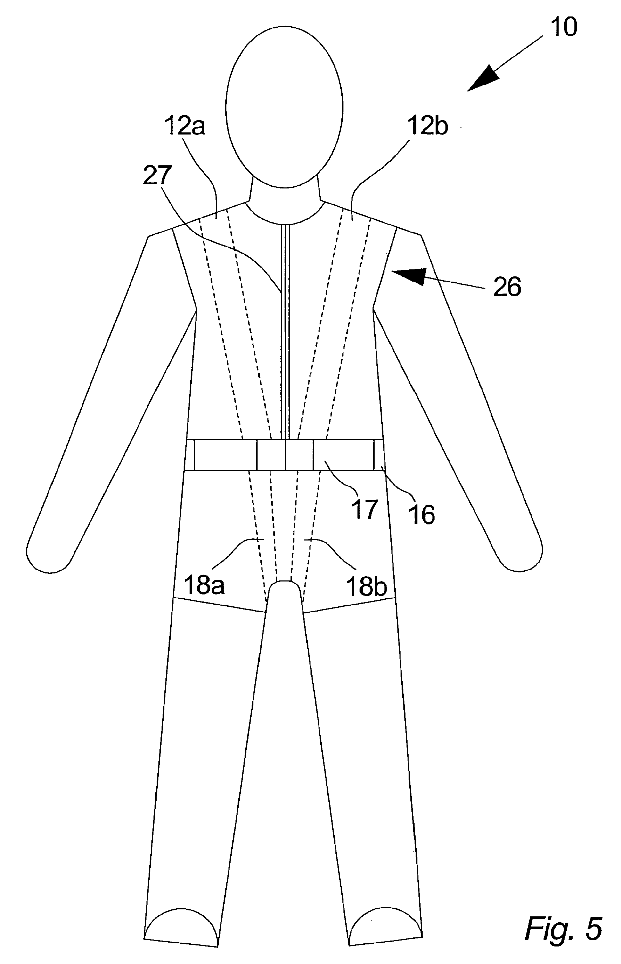

Fig. 5 illustrates a passenger 10 wearing a harness suit 26 wherein the suit is seen from the front.

The suit 26 preferably forms a shirt and shorts for passenger separated by a harness belt 16. The front of the suit 26 above the harness belt is provided with means for opening and closing 27 the suit 26 and the harness belt 16 is provided with a channel 17 for passing the seatbelt through.

The suit 26 is preferably provided with harness straps 12a, 12b, 18a, 18b sewn into the suit as illustrated with dotted lines. However, the suit may also be made of a material strong enough to hold the passenger on its own.

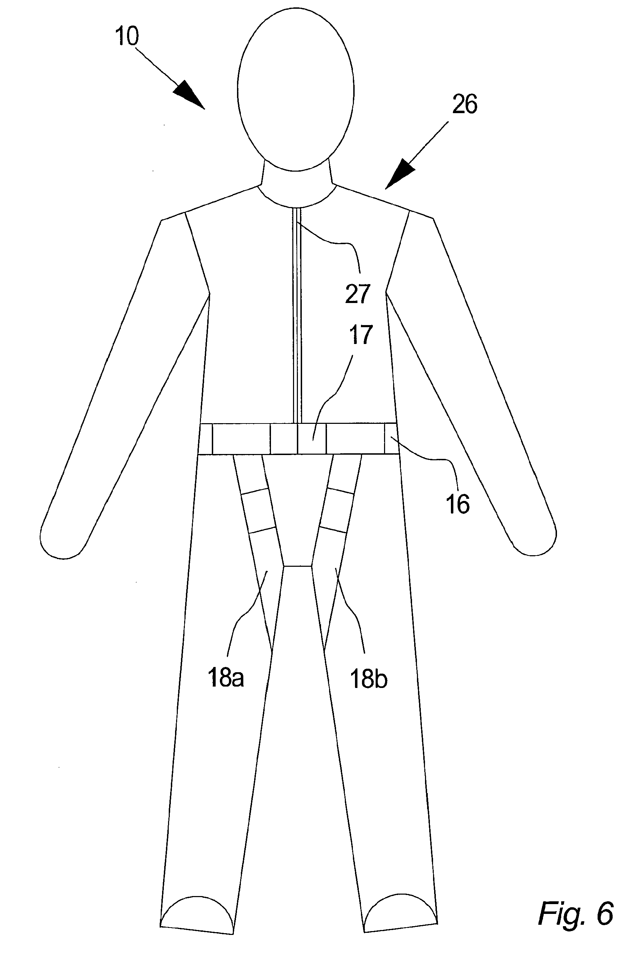

Fig. 6 illustrates a passenger 10 wearing a harness suit 26 with crutch straps 18a, 18b instead of "the shorts". As illustrated the crutch straps 18a, 18b can be provided with means for opening and closing the straps and means for adjusting the length of the crutch straps.

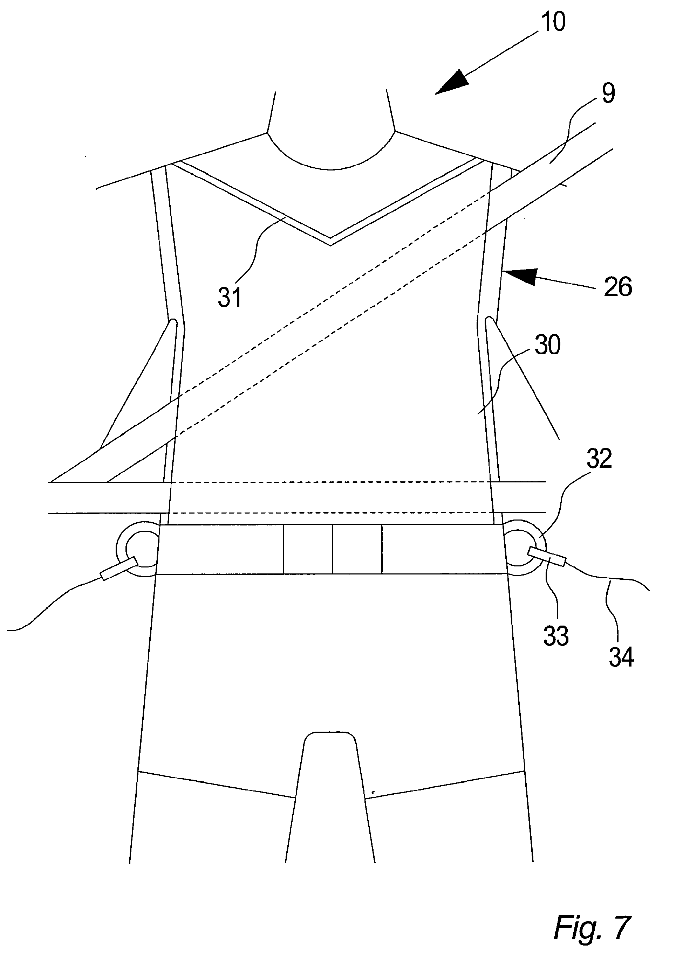

Fig. 7 illustrates a passenger wearing a further embodiment of the suit 26 especially prepared to use with a three-point seatbelt 9.

The formed shirt of the harness suit comprises double layers 30 of a strong material. The three-point seatbelt 9 is passed through the channel which is established in between the two layers of the harness. The double layers 30 may be positioned at the front of the passenger or the back and replaces in functionality the channel of the harness belt. However, the suit still comprises a harness belt to secure the harness to the waist of the passenger. The harness belt is also illustrated with belt attachment means 32 for an additional connection (as described in connection with fig. 4) beside the seatbelt wherein the connection includes a wire 33 with some sort of hook 34.

The double layers include connection lines 31 in proximity of the neck of the passenger wherein the lines may be sewing lines in a strong thread. The lines connect the layers and protect the passenger from a horizontal movement of the seatbelt toward the neck e.g. at emergency braking.

The invention has been exemplified above with reference to specific examples of a safety system for sleeping coaches with seats which may be transformed to bed places. However, it should be understood that the invention is not limited to the particular examples described above but may be designed and altered in a multitude of varieties within the scope of the invention as specified in the claims such as using less transformable bed places e.g. bed places of trains.

### List

1. Section of a row of seats in a sleeping coach
2. Seat
3. Top part of a seat
4. Lower part of the bottom part of a seat
5. Seatback
6. Seat frame
7. Pivoting point in transforming the seat to a bed place
8. Floor of the sleeping coach
9. Seatbelt
10. Passenger in the sleeping coach
11. Harness
12. Shoulder strap of the harness
13. Tongue of the seatbelt
14. Buckle of a seatbelt extender
15. Seatbelt extender
16. Harness belt
17. Channel in the harness belt
18. Crutch strap
19. Length adjustment means for the shoulder strap
20. Release means for the shoulder strap
21. Width adjustment and release means
22. Length adjustment means for the crutch strap
23. Release means for the crutch strap
24. Neck attachment means
25. Crutch attachment means
26. Harness suit
27. Means for opening and closing the suit
28. Connection strap between the shoulder straps
29. Shoulder or crutch cushions
30. Double layer harness suit
31. Connection lines between the double layers of the harness suit
32. Belt attachment means
33. Wire
34. Hook

## Claims

1. Safety system for passengers of a sleeping coach or similar vehicles that include horizontal bed places to be used during transport, said system comprising
safety means of the sleeping coach such as at least one seatbelt, and
a harness for each passenger to wear when using a bed place
wherein the harness includes connection means to said safety means and means for restricting movement of the passenger in a substantially horizontal direction.

2. Safety system according to claim 1 wherein said harness includes at least two shoulder and/or crutch straps (12a, 12b, 18a, 18b).

3. Safety system according to claim 2 wherein said straps (12a, 12b, 18a, 18b) are divided in relation to the vertical centre line of the passenger e.g. on each shoulder and along the thighs.

4. Safety system according to claim 2 or 3 wherein said straps (12a, 12b, 18a, 18b) are connected to a harness belt (16).

5. Safety system according to any of claims 1 to 4 wherein said connection means of the harness (11, 26) includes a channel (17) for the seatbelt (9, 15) to go through.

6. Safety system according to any of claims 1 to 5 wherein said connection means is part of said harness (11, 26) at the front or back e.g. part of a harness belt (16) and/or connection strap (28).

7. Safety system according to any of claims 1 to 6 wherein said harness total or partly is a suit e.g. formed as a connected shirt and shorts with a harness belt as well as double layer connection means (30).

8. Safety system according to any of claims 2 to 7 wherein said straps (12a, 12b, 18a, 18b) comprise protection cushions such as shoulder and/or crutch cushions (29).

9. Safety system according to any of claims 1 to 8 wherein said seatbelt (9) is extended by a seatbelt extender (14, 15).

10. Sleeping coach or similar vehicles for transporting passengers in seats that may be used as substantially vertical bed places wherein each passenger is connected with safety means such as a seatbelt of the sleeping coach and a safety system according to any of claims 1 to 9 to the sleeping coach when using one of said bed places.
